# EUROPEAN PATENT APPLICATION

(11) **EP 2 263 978 A1**
(43) Date of publication of application: **22.12.2010**
(21) Application number: 09161485.9
(22) Date of filing: 29.05.2009
(51) Int. Cl.: C03B 9/32, C03B 9/34, C03B 9/36, C03B 23/035

(54) **Methods and relative machine for making glass objects, and glass objects thus obtained**

(71) Applicant: Vetromecc S.r.l. Con Unico Socio, 35017 Piombino Dese (PD) (IT)
(72) Inventor: Pattaro, Davide, 35010 Trebaseleghe (PD) (IT)
(74) Representative: Petraz, Gilberto Luigi

(57) **Abstract**

Method to make hollow glass objects, having a smooth external surface and an internal surface comprising reliefs (13) in a desired disposition, and having undercuts and/or inlet gaps with sizes smaller than the body of the glass object, comprising a first step in which a flat glass tile (12) is made, having a first smooth surface and a second surface comprising said reliefs (13). The method comprises a second step in which the tile (12), at softening temperature, is disposed on a counter-mold (32) associated with a mold (15), comprising a cavity (16), having a wall with a shape mating with the desired final shape of the glass object. The tile (12) is deposited between said counter-mold (32) and said mold (15) so as to achieve a hydraulically sealed interspace (25) between said counter-mold (32) and said tile (12). The method comprises a third step in which, by means of delivery means, compressed air is introduced into said interspace (25), able to progressively expand said tile (12) into contact with the wall of said cavity (16) in order to form the glass object (50) with the desired reliefs (13).

## Description

### FIELD OF THE INVENTION

The present invention concerns a method, and the relative machine, for making glass objects, such as vases, articles for illumination, carafes, kitchen containers, furnishing elements or other.

In particular, the present invention concerns a method and a machine for making glass objects, using molds, in which said hollow glass objects have undercuts in their internal cavity and/or inlet gaps with sizes smaller than the body of the object, a substantially smooth external surface and an internal surface comprising reliefs able to achieve designs, decorative patterns, writings and suchlike. The present invention also concerns the glass objects having undercuts in their internal cavity and/or inlet gaps with sizes smaller than the body of the object, a substantially smooth external surface and an internal surface comprising reliefs, obtained using the above method and machine.

### BACKGROUND OF THE INVENTION

It is known to make hollow glass objects, with a substantially smooth external surface and an internal surface comprising reliefs to form designs, writings or decorative patterns.

A known method for carrying out such processes provides to make glass tiles, with a first smooth or substantially smooth surface, and an opposite second surface comprising the reliefs according to a desired disposition. The tiles are obtained by depositing molten glass in a flat mold with an internal surface comprising hollows, able to be filled by the glass and disposed so as to achieve the desired reliefs.

The known method then provides, after the glass has solidified, to separate the tiles bearing the surfaces reliefs from the corresponding molds, and to assemble them so as to achieve the glass object in its final form. A variant provides that the tiles are positioned on a mold in which there are parallel vertical walls, or slightly diverging toward the opening. An operation to deposit and stretch the still hot tiles allows to rest the tiles on the surfaces and obtain an object, without undercuts, having an aperture equal to or greater than the base.

One purpose of the present invention is to perfect a method to obtain glass objects as indicated, having undercuts and/or inlet gaps with sizes smaller than the body of the object.

Another purpose of the present invention is to achieve a machine that allows to produce said glass objects reducing the times and costs of production and allowing to obtain hollow forms of substantially any shape.

Another purpose of the present invention is to achieve hollow glass objects, having a substantially smooth external surface and an internal surface comprising reliefs so as to achieve designs, decorative patterns, writings and suchlike and having undercuts and/or inlet gaps with sizes smaller than the body of the object

Another purpose of the present invention is to perfect a method and to achieve a machine for the production of said glass objects that allow to increase productivity.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes a method to make glass objects according to the present invention is used to make hollow glass objects, having a substantially smooth external surface and an internal surface comprising predetermined reliefs able to achieve designs, decorative patterns, writings and suchlike and comprising undercuts and/or inlet gaps with sizes smaller than the body of the object.

The method comprises a first step in which a tile is made with a first smooth or substantially smooth surface and a second surface comprising reliefs according to a desired disposition. The tile is made, for example, by depositing molten glass in a flat mold. The mold has a peripheral shape consistent with the final shape of the glass object and comprises hollows distributed on the surface so as to achieve, on the second surface of the tile, reliefs according to the desired disposition.

The method also comprises a second step in which the tile is associated with a mold having an access mouth in correspondence with an internal cavity with a wall having a shape mating with the desired final shape of the object. The tile is deposited on a counter-mold, associated with the mold, so as to be interposed between the cavity of the mold and the counter-mold, thus depositing the first and second surface toward the cavity or toward the counter-mold. The tile is deposited on the counter-mold so as to define a hydraulically sealed interspace with the counter-mold, also achieving a mechanical grip thereof.

According to a characteristic feature of the present invention, the method also comprises a third step in which, by means of delivery means, compressed air is introduced into said interspace between the tile and the counter-mold. In this way the glass tile, advantageously kept at a softening temperature suitable to allow it to deform, is progressively expanded, thanks to the compressed air, inside the cavity of the mold that defines the external shape of the object. The tile in this way is progressively taken into contact with the surface of the cavity of the mold, therefore allowing the object to be formed in the desired shape, and comprising the reliefs in its internal surface.

The method comprises a fourth step in which the glass object is extracted from the mold in its final form.

According to an advantageous feature of the present invention, the glass tile is disposed with its second surface comprising the reliefs toward the counter-mold. In this way, in the third step, during the expansion of the tile due to the effect of the introduction of compressed air, the reliefs present on the second surface are stretched thanks to the expansion of the first surface toward the wall of the internal cavity of the mold.

According to a variant, the glass tile is disposed with the second surface comprising the reliefs toward the internal cavity of the mold. Therefore, in the third step, during the expansion of the tile due to the effect of the introduction of compressed air, when the second surface reaches the wall of the internal cavity, the reliefs, due to the effect of the contact with the wall of the mold, are transferred through inversion from the second surface to the first surface. In this way the desired decorations and/or designs are always disposed toward the inside of the object, even when the object has a complex shape, and/or with reduced radii of curvature.

According to another variant, in the first step the glass tile is made so as to comprise on its second surface glass chippings and/or filaments and/or metal particles or suchlike, in a desired disposition, so as to form designs, decorations or other.

In this way, in the third step, the glass chippings and/or filaments and/or metal particles are stretched in conjunction with the second surface of the glass tile.

The present invention also concerns a machine for making hollow glass objects, having undercuts and/or inlet gaps with sizes smaller than the body of the object and a substantially smooth external surface and an internal surface comprising predetermined reliefs and/or glass chippings and/or filaments and/or metal particles or suchlike, in a desired disposition so as to form decorations or designs, or writings and suchlike.

The machine according to the present invention comprises a mold having an internal cavity, with a predetermined shape mating with the desired final shape of the glass object. The mold also comprises a perimeter prong associated with an access mouth to said cavity. The perimeter prong defines a supporting step suitable for positioning a glass tile.

The machine comprises a counter-mold suitable to be mechanically coupled both with a perimeter portion of the glass tile, disposed on the supporting step, and also with the mold itself, so as to mechanically clamp the tile in correspondence with the mouth of the mold. The counter-mold defines, during use, a hydraulically sealed interspace with the tile.

According to a characteristic feature of the present invention, the counter-mold comprises at least a hole suitable to introduce compressed air inside the interspace in order to allow the expansion of the glass tile, kept at softening temperature, in the cavity of the mold, and the consequent expansion of the surfaces of the tile in contact with the wall of the cavity.

The counter-mold has at least a pipe associated with said hole and suitable for the introduction of compressed air into said interspace.

According to another characteristic feature, the counter-mold is movable between a first position, for the deposit of the glass tile on the counter-mold, and a second position, for the introduction of compressed air and the consequent expansion of the glass tile inside said cavity.

According to an advantageous characteristic, the machine comprises movement means, mechanically coupled to the counter-mold and suitable to move the counter-mold between its first and second position.

According to another advantageous characteristic of the present invention, the mold comprises half-molds, mechanically coupled with each other and mobile between a first position of reciprocal closure, able to define said internal cavity, and a second position of reciprocal opening, able to allow the glass object to be extracted, in the desired shape after the introduction of compressed air, the consequent expansion and consolidation of the object.

According to a variant of the present invention, the machine also comprises heating means able to keep the temperature around a softening temperature of said tile.

The present invention also concerns a glass object comprising a body made in a single piece. The body comprises a shaped wall configured to define a hollow compartment, and at least a mouth connecting to the hollow compartment. The wall comprises a first external surface, substantially smooth, and a second surface, disposed toward the inside of the hollow compartment, comprising reliefs toward the inside of the hollow compartment and in a desired and predetermined disposition.

According to a characteristic feature, the mouth defines an inlet gap to the hollow compartment, with a cross section less than a maximum bulk of the body.

According to another characteristic feature, the shaped wall comprises undercuts made according to desired geometric dispositions.

According to a variant of the glass object according to the present invention, the second surface comprises glass chippings and/or filaments and/or metal particles in a desired disposition.

### BRIEF DESCRIPTION OF THE DRAWINGS

These and other characteristics of the present invention will become apparent from the following description of a preferential form of embodiment, given as a non-restrictive example with reference to the attached drawings wherein:
- - fig. 1: is a schematic front view of a machine for making glass objects in a first step of the method according to the present invention;
- - fig. 2: is a schematic front view of the machine in fig. 1 in a first configuration during a second step of the method according to the present invention;
- - fig. 3: is a schematic front view of the machine in fig. 1 in a second configuration during the second step;
- - fig. 4: is a schematic front view of the machine in fig. 1 in a third step of the method according to the present invention;
- - fig. 5: is a schematic view from above of a detail of the machine in fig. 1;
- - fig. 6: is a three-dimensional view of a glass object according to the present invention in a first form of embodiment;
- - fig. 7: is a three-dimensional view of a glass object according to the present invention in a second form of embodiment;
- - fig. 8: is a schematic front view of a machine according to the present invention in a second form of embodiment.

### DETAILED DESCRIPTION OF A PREFERENTIAL FORM OF

### EMBODIMENT

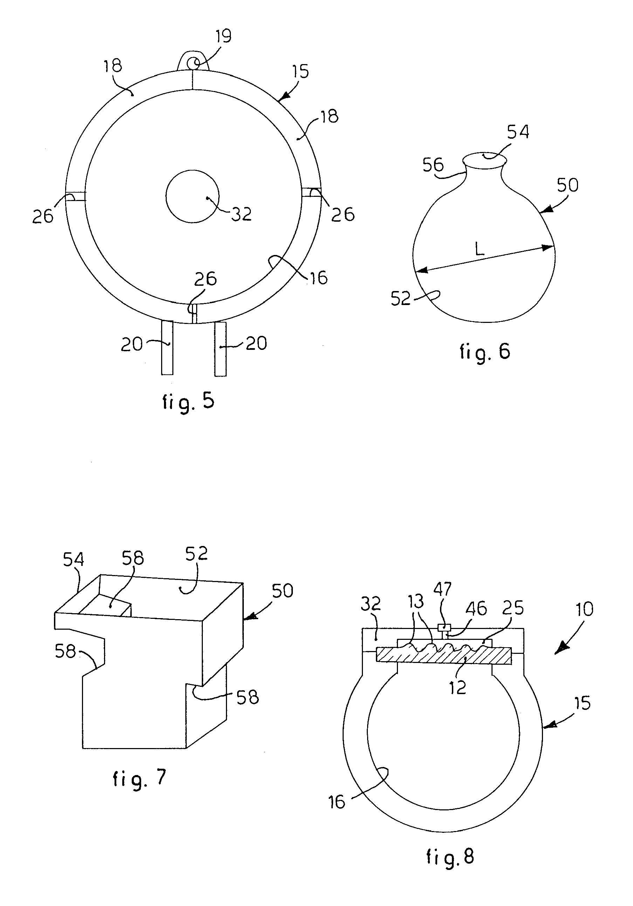

With reference to the attached drawings, a method to make objects according to the present invention is used to produce glass objects 50 made in a single piece and comprising a shaped wall suitable to define a hollow compartment 52. The wall comprises a first external surface, smooth or substantially smooth, and a second surface, disposed toward the inside, comprising reliefs 13 protruding toward the inside of the hollow compartment 52, so as to form designs and/or writings and/or decorations according to a predetermined disposition. The mouth 54 is associated with a neck portion 56 which defines a narrowing of the cross section, or an inlet gap, smaller than the maximum bulk L of the body itself. By maximum bulk L we mean the maximum linear size defined by a cross section obtained as the intersection of a plane with the body of the object 50. The shaped wall can also comprise undercuts 58 (fig. 7) according to a desired disposition.

In a preferential form of embodiment, the glass object 50 is made using a method and a machine 10 that comprises a first step in which a glass tile 12 is produced. By glass tile 12 we mean a portion of glass flattened and shaped in thickness, having a perimeter shape defined by a flat forming mold of a known type and not shown in the drawings. The glass tile 12 is made by depositing molten glass in the forming mold having a perimeter shape consistent with the final shape of the object, in this case ovoid or spheroid. The tile 12 is made with a first smooth or substantially smooth surface. The internal wall of the flat mold comprises hollows disposed in such a manner as to impart, on a second surface of the tile 12, reliefs 13 according to a desired disposition.

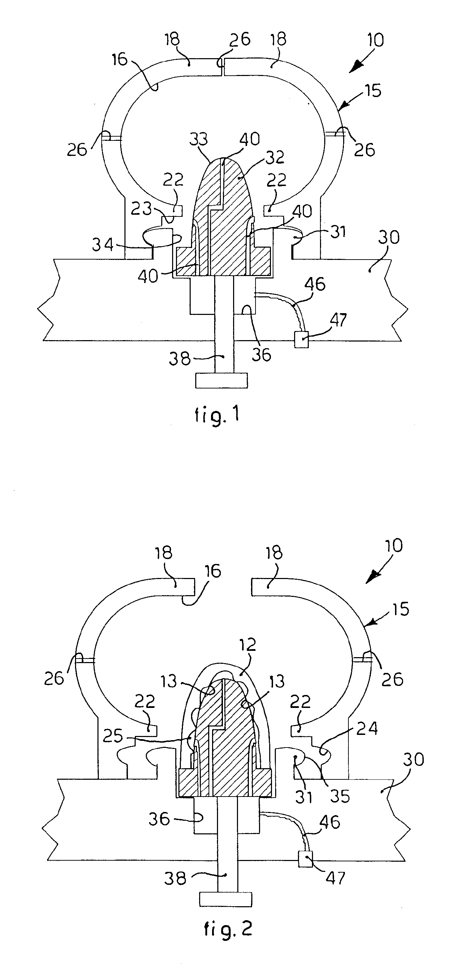

The method also comprises a second step (fig. 2) in which the tile 12, separated from the flat mold, is associated with a mold 15, comprising a cavity 16 with a substantially smooth internal wall. The shape of the internal wall is mating with the shape of the glass object in its final form.

In a preferential embodiment the mold 15 comprises two half-shells 18 reciprocally coupled by means of a hinge 19 (fig. 5), able to allow a reciprocal rotation. Each half-shell 18 also comprises a handle 20 able to allow them to be reciprocally separated and/or closed.

The tile 12, kept at a suitable softening temperature by means of heating means of a known type and not shown in the drawings, such as for example electric resistances, is deposited on a counter-mold 32 of a lid 30 that closes the cavity 16 (fig. 2). The counter-mold 32 has a substantially oblong shape and is able to slide axially in a sliding seating 34 of the lid 30, between a first position, suitable for the tile 12 to be deposited, and a second position suitable for working the tile 12. In the second position the counter-mold 32 is inserted into the cavity 16 until it is stopped, by abutment, by a perimeter prong 22 of the mold 15. The counter-mold 32 is also coupled with a maneuver piston 38 which allows it to slide between said positions. The half-shells 18 are reciprocally separated to facilitate the deposit of the tile 12 with its second surface comprising the reliefs 13 disposed in contact with a surface 33 of the counter-mold 32.

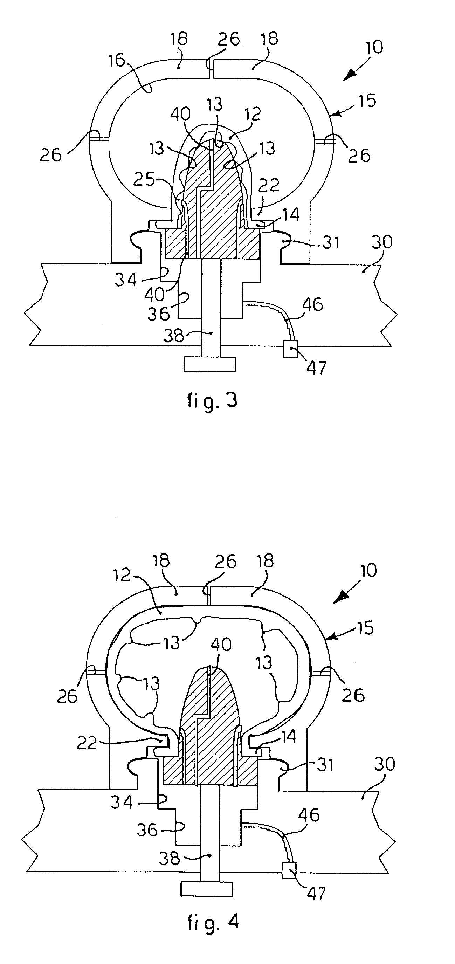

At the end of the second step the half-shells 18 are rejoined (fig. 3) and the counter-mold 32 is moved to its second position, so as to deform the tile 12 in proximity with the base of the counter-mold 32. In this way, due to the deformation and flattening of the glass of the tile 12, a gripping edge 14 is achieved, disposed during use between the base of the counter-mold 32 and the perimeter prong 22. Therefore, the edge 14 is suitable both to clamp the tile 12 between the mold 15 and the associated counter-mold 32, and also to achieve a hydraulic seal for an interspace 25 that is formed between a surface 33 of the counter-mold 32 and the surface of the tile 12 disposed on the counter-mold 32.

According to a preferential embodiment, moreover, the lid 30 comprises an extension 31, hollow inside and suitable to define an extension of the sliding seating 34 toward the inside of the mold 15. The extension 31 comprises a convex edge 35 (fig. 2) disposed in an annular manner, able to cooperate with an associated annular concavity 24 of the mold 15. In this way, when the two half-shells 16 are joined and the counter-mold 32 is disposed in its second position, a step is made acting as a mechanical grip between the second mold 15 and the lid 30, and also as a hydraulic seal for the sliding seating 34 and a connected introduction chamber 36.

The method comprises a third step in which, by means of delivery means of a known type, not shown in the drawings, compressed air is progressively introduced into the introduction chamber 36 and into the connected sliding seating 34. To this purpose, the lid 30 comprises a feed pipe 46 which connects an inlet valve 47 for the introduction of compressed air, to the introduction chamber 36.

Furthermore, the counter-mold 32 comprises inside a plurality of pipes 40 that connect the base of the counter-mold 32, disposed toward the sliding seating 34, and the surface 33 of the counter-mold 32.

According to a variant not shown in the attached drawings, the feed pipe 46 and the inlet valve 47 are made in the piston 38. In particular, the feed pipe 46 is connected to a single inlet pipe 40 of the counter-mold 32, which branches into several subpipes suitable to face the surface 33 of the counter-mold 32.

Therefore in said third step the compressed air introduced into the chamber 36, due to the hydraulic seal between the lid 30 and the mold 15, is made to flow through the pipes 40 and blown into the interspace 25 between the tile 12 and the surface 33 of the counter-mold 32.

The tile 12 is therefore made to expand progressively inside the cavity 16 of the mold, until its second surface (fig. 4) is stretched on the internal wall of the cavity 16. With the expansion of the tile 12, the second surface comprising the reliefs 13 is progressively stretched together with the first surface, allowing to keep the reliefs 13 in the desired disposition. The gradual expansion of the tile 12 in the cavity 16 is associated with an expulsion from the mold 15, by means of airholes 26, of the compressed air in the volume between the first surface and the wall of the cavity 16 intended for gradual reduction during the expansion of the tile 12.

The method also comprises a fourth step in which, at the end of the introduction of compressed air, the glass object is removed from the mold 15 after the two half-shells 18 have been separated.

According to a variant not shown in the attached drawings, the tile 12 is disposed in the second step on the counter-mold 32 with its second surface comprising the reliefs 13 facing toward the cavity 16 of the second mold 15. In this way, in the third step, during the expansion of the tile 12 when the second surface reaches the internal wall of the cavity 16 of the mold 15, the reliefs 13 in contact with said internal wall are transferred by inversion, due to the malleability of the glass at suitable temperature, onto the first surface disposed toward the inside of the cavity 16.

In a second form of embodiment of the machine 10 according to the present invention, shown in fig. 8, the tile 12 is deposited, at softening temperature, on the supporting step 23 of the mold 15 and mechanically clamped in its edge 14 by the lid 30, which also functions as a counter-mold. By delivering compressed air by means of the inlet valve 47 into the interspace 25, the tile 12 is made to expand inside the cavity 16 until it is stretched on the internal wall of the cavity 16, to assume the final desired form of the glass object 50.

It is clear that modifications and/or additions of parts may be made to the method and machine for making glass objects as described heretofore, without departing from the field and scope of the present invention.

It is also clear that, although the present invention has been described with reference to some specific examples, a person of skill in the art shall certainly be able to achieve many other equivalent forms of method and machine for making glass objects, having the characteristics as set forth in the claims and hence all coming within the field of protection defined thereby.

## Claims

1. Method to make hollow glass objects (50), having a smooth external surface and an internal surface comprising reliefs (13) in a desired disposition, and having undercuts and/or inlet gaps with sizes smaller than the body of the glass object (50), comprising
- a first step in which a flat glass tile (12) is made, having a first smooth surface and a second surface comprising said reliefs (13);
- a second step in which the tile (12), at softening temperature, is disposed on a counter-mold (32) associated with a mold (15), comprising a cavity (16), having a wall with a shape mating with the desired final shape of the glass object (50), and in which said tile (12) is deposited between said counter-mold (32) and said mold (15) so as to achieve a hydraulically sealed interspace (25) between said counter-mold (32) and said tile (12), **characterized in that** it comprises a third step in which, by means of delivery means, compressed air is introduced into said interspace (25), able to progressively expand said tile (12) into contact with the wall of said cavity (16) in order to form the glass object (50) with the desired reliefs (13).

2. Method as in claim 1, **characterized in that** it comprises a fourth step in which said glass object (50) is removed from the mold (15) in its final form.

3. Method as in claim 1 or 2, **characterized in that** in said second step said tile (12) is deposited with the second surface, comprising said reliefs (13), toward said counter-mold (32), in order for said first surface to expand into contact with said wall of said cavity (16).

4. Method as in claim 1 or 2, **characterized in that** in said second step said tile (12) is deposited with said first surface toward said counter-mold (32).

5. Method as in claim 4, **characterized in that** in said third step said reliefs (13), having come into contact with said wall of said cavity (16), are transferred by inversion from the second surface of the tile (12) to the first surface of the tile (12).

6. Method as in any claim hereinbefore, **characterized in that** in said first step said tile (12) is made with said second surface comprising glass chippings and/or filaments and/or metal particles in a desired disposition able to form designs and/or decorations.

7. Method as in claim 6, **characterized in that** in said third step said glass chippings and/or filaments and/or metal particles are stretched in conjunction with the second surface of said tile (12).

8. Machine to make hollow glass objects (50), having a smooth external surface and an internal surface comprising reliefs (13) distributed as desired, and having undercuts and/or inlet gaps with sizes smaller than the body of the glass object (50), comprising a mold (15) having a cavity (16), with a shape mating with the desired final shape of said glass object (50), a perimeter prong (22) associated with a mouth giving access to said cavity (16) and able to define a supporting step for a glass tile (12) having a first smooth surface and a second surface comprising reliefs (13) and/or glass chippings and/or filaments and/or metal particles, and a counter-mold (32) able to be mechanically coupled both with a perimeter portion (14) of said glass tile (12), disposed on said supporting step, and also with said mold (15) in order to clamp said tile (12) in proximity with said mouth, wherein said counter-mold (32), during use, defines a hydraulically sealed interspace (25) with said tile (12), **characterized in that** said counter-mold (32) comprises at least a hole suitable for the introduction of compressed air inside said interspace (25) for the expansion of the glass tile (12) in said cavity (16) of said mold (15).

9. Machine as in claim 8, **characterized in that** said counter-mold (32) comprises at least a pipe (40) associated with said hole and able to blow compressed air into said interspace (25).

10. Machine as in claim 8 or 9, **characterized in that** said counter-mold (32) is mobile between a first position suitable for the deposit of said glass tile (12) and a second position suitable for the introduction of compressed air into said interspace (25).

11. Machine as in claim 10, **characterized in that** said counter-mold (32) is able to slide axially in a sliding seating (34) between said first position and said second position.

12. Machine as in claim 11, **characterized in that** it comprises sliding means (38), mechanically coupled with the counter-mold (32) and suitable for sliding said counter-mold (32) between said first position and said second position.

13. Machine as in claim 12, **characterized in that** said sliding means comprise a piston (38).

14. Machine as in any claim from 8 to 13, **characterized in that** said mold (15) comprises half-molds (18) mechanically coupled and mobile between a first position, able to form said cavity (16) of said mold (15), and a second open position able to allow the glass object (50) in the desired shape to be removed.

15. Machine as in any claim from 8 to 14, **characterized in that** said mold (15) comprises airholes (26) suitable to expel the excess air during the expansion of said glass tile (12) in said cavity (16).

16. Machine as in any claim from 8 to 15, **characterized in that** it comprises heating means, able to keep a temperature near to a softening temperature of said tile (12).

17. Glass object comprising a body made in a single piece comprising a shaped wall able to define a hollow compartment (52) and at least a mouth (54) connecting with said hollow compartment (52), said wall having a first external surface and a second surface, disposed toward the inside of said hollow compartment (52), comprising reliefs (13) distributed as desired toward the inside of said hollow compartment (52), said mouth (54) defining an inlet gap to said hollow compartment (52) with a cross section smaller than a maximum bulk L of said body.

18. Glass object comprising a body made in a single piece comprising a shaped wall able to define a hollow compartment (52) and at least a mouth (54) connecting with said hollow compartment (52), said wall having a first external surface and a second surface, disposed toward the inside of said hollow compartment (52), comprising reliefs (13) distributed as desired toward the inside of said hollow compartment (52), **characterized in that** said shaped wall comprises undercuts (58) according to desired geometric dispositions.

19. Glass object as in claim 17 or 18, **characterized in that** said mouth (54) comprises a neck portion (56) which connects it to said hollow compartment (52).

20. Glass object as in any claim from 17 to 19, **characterized in that** said second surface comprises glass chippings and/or filaments and/or metal particles in a desired disposition.
